(19) Europäisches Patentamt
European Patent Office
Office européen des brevets

(11) EP 4 749 698 A1

(12) EUROPEAN PATENT APPLICATION

(43) Date of publication:
27.05.2026 Bulletin 2026/22

(51) International Patent Classification (IPC):
H01M 4/04 (2006.01)      H01M 4/13 (2010.01)
H01M 4/139 (2010.01)     H01M 10/052 (2010.01)

(21) Application number: 25217059.2

(22) Date of filing: 19.11.2025

(52) Cooperative Patent Classification (CPC):
H01M 4/0404; H01M 4/13; H01M 4/139;
H01M 10/052; H01M 2004/021; H01M 2004/027

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 22.11.2024 KR 20240168851

(71) Applicant: SAMSUNG SDI CO., LTD.
Yongin-si, Gyeonggi-do 17084 (KR)

(72) Inventors:
• LEE, Hojung
  17084 Yongin-si (KR)
• HONG, Daehyun
  17084 Yongin-si (KR)
• JI, Hyeongmin
  17084 Yongin-si (KR)

(74) Representative: Maiwald GmbH
Elisenhof
Elisenstraße 3
80335 München (DE)

(54) ELECTRODE FOR BATTERY, METHOD FOR MANUFACTURING THE SAME, AND RECHARGEABLE BATTERY INCLUDING THE SAME

(57) An electrode for a battery according to an example embodiment includes a substrate, a first active material layer formed on a first surface of the substrate and having first holes, and a second active material layer formed on a second surface of the substrate and having second holes, wherein the density of the first holes is different from the density of the second holes.

FIG. 1

EP 4 749 698 A1

**Description**

**BACKGROUND**

**(a) Field of the Disclosure**

The present disclosure relates to an electrode for a battery, a manufacturing method, and a rechargeable battery including the electrode.

**(b) Description of the Related Art**

As technology for portable devices develops, the demand for rechargeable batteries as an energy source is increasing. Rechargeable batteries, unlike primary batteries, are typically repeatedly charged and discharged.
Rechargeable batteries can be formed by overlapping a positive electrode, a separator, and a negative electrode, and then winding the positive electrode, the separator and the negative electrode to form a cylindrical or jellyroll-shaped electrode assembly, or by separating the positive electrode, the separator and the negative electrode into sheets and then stacking the positive electrode, the separator and the negative electrode to form a laminated electrode assembly.
The electrode forms an active material layer by applying an active material on a metal substrate and drying the active material. The active material layer includes a binder and a solvent, and the solvent in the active material layer is volatilized by the heat applied during the drying process. In this instance, the solvent and the binder move to an upper portion of the active material layer.
The binder having moved to the upper portion thereof interrupts lithium ions from moving to the active material layer, and increases the resistance of the battery, which may deteriorate electrical performance of the battery.
The above information disclosed in this Background section is only for enhancement of understanding of the background of the disclosure, and therefore may contain information that does not form the prior art that is already known to a person of ordinary skill in the art.

**SUMMARY**

Examples of the present disclosure describe an electrode for a battery for reducing or preventing deterioration of an electric characteristic of the battery when a binder moves while drying an active material layer, a manufacturing method thereof, and a rechargeable battery including the active material layer.
An example embodiment of the present disclosure includes an electrode for a battery including a substrate, a first active material layer formed on a first surface of the substrate and having first holes, and a second active material layer formed on a second surface of the substrate and having second holes, wherein the density of the first holes is different from the density of the second holes.
The density of the second holes may be greater than the density of the first holes.
The density of the second holes may be at least twice the density of the first holes.
The density of the first holes may be in a range of from about 50 pt/mm$^2$ to about 300 pt/mm$^2$, and the density of the second holes may be in a range of from about 100 pt/mm$^2$ to about 600pt/mm$^2$.
Diameters and depths of the first holes and the second holes may be the same.
The diameters of the first holes and the second holes may be in a range of from about 5 $\mu$m to about 70 $\mu$m.
The first holes and second holes may have widths that decrease in accordance with a distance thereof to the substrate.
The first holes and the second holes may be arranged in a matrix configuration.
The first active material layer and the second active material layer may include a negative electrode active material.
Another example embodiment of the present disclosure includes a method for manufacturing an electrode for a battery including applying an active material on a first surface of a substrate and forming a first active material layer, forming first holes in the first active material layer, drying the first active material layer, applying an active material on a second surface of the substrate and forming a second active material layer, forming second holes with a density that is higher than the density of the first holes in the second active material layer, and drying the second active material layer at a higher temperature than the first active material layer.
The density of the second holes may be at least twice the density of the first holes.
The drying of the second active material layer may include drying the second active material layer at a same drying rate as the first active material layer at a temperature that is higher than a drying temperature of the first active material layer by about 10°C or more.
The first active material layer and the second active material layer may include a negative electrode active material, the first active material layer may be dried at the rate of about 10 m/min at the temperature in a range of from about 50°C to about 100°C, and the second active material layer may be dried at the rate of about 10 m/min at the temperature in a range of from about 60 °C to about 110 °C.

The first holes and the second holes may have the same diameter and depth.

Another example embodiment of the present disclosure includes a rechargeable battery including an electrode assembly including a positive electrode, a negative electrode overlapping the positive electrode, and a separator disposed between the positive electrode and the negative electrode; a case for receiving the electrode assembly; an electrolyte injected into the case; and a cap assembly for sealing the case. At least one of the positive electrode and the negative electrode includes a substrate, a first active material layer formed on a first surface of the substrate and having first holes, and a second active material layer formed on a second surface of the substrate and having second holes having a greater density than the first holes.

The electrode assembly may be or include a winding-type electrode assembly, and the first holes and the second holes may be arranged in a matrix configuration in a winding direction of the electrode assembly.

When the active material layer having holes with different densities according to the present disclosure, a permeation time of the electrolyte may be reduced, and productivity may be increased.

The electrolyte may be uniformly, or substantially uniformly, impregnated to the active material layer by maintaining the permeation time of the electrolyte to the active material layer formed on the respective surfaces of the substrate. Therefore, precipitation of lithium of the electrode caused by non-uniformity of electrolyte may be reduced, thereby providing the battery with an increased electrical lifespan.

When the binder moves, the lithium ions may move fluidly to reduce resistance and provide the battery with improved electric characteristics.

## BRIEF DESCRIPTION OF THE DRAWINGS

The following drawings appended to the specification illustrate example embodiments of the present disclosure to describe a technical concept of the present disclosure to be understood, together with detailed descriptions of the present disclosure, so the present disclosure should not be meant to restrict the disclosure to the matters illustrated in the accompanying drawings.

FIG. 1 illustrates a top plan view of an electrode for a battery according to an example embodiment.
FIG. 2 illustrates a cross-sectional view with respect to a line II-II' of FIG. 1.
FIG. 3 and FIG. 4 illustrate a method for manufacturing an electrode according to an example embodiment.
FIG. 5 illustrates a top plan view on an electrode for a battery according to another example embodiment.
FIG. 6 illustrates a perspective view on a rechargeable battery according to an example embodiment.
FIG. 7 illustrates a cross-sectional view on a rechargeable battery illustrated in FIG. 6.
FIG. 8 is a flowchart illustrating a method of manufacturing an electrode for a battery, according to an example embodiment.

## DETAILED DESCRIPTION

Example embodiments of the present disclosure are described in detail with reference to the accompanying drawings. Terms or words used in the present specification and claims, which are described below, should not be interpreted as being limited to typical or dictionary meanings, but should be interpreted as having meanings and concepts which comply with the technical features of the present disclosure, based on the principle that an inventor can appropriately define the concept of the terms to describe their own disclosure in the best manner. Therefore, configurations illustrated in the example embodiments and the drawings described in the present specification are only example embodiment of the present disclosure and do not represent all of the technical features of the present disclosure, and thus it is to be understood that various equivalents and modified examples, which may replace the configurations, are possible when filing the present application.

When used in the present specification, "comprise and include" and/or "comprising and including" may specify the existence of the mentioned shapes, numbers, steps, operations, members, elements and/or these groups, and may not exclude the presence or addition of one or more other shapes, numbers, movements, members, elements and/or groups.

To aid in the understanding of the disclosure, the attached drawings may not be drawn to actual scale, but the dimensions of some components may be exaggerated. The same reference number may be assigned to the same component in another example embodiment.

Although first, second, and the like, are used to describe various components, the components may not be limited by these terms. These terms are only used to distinguish one component from another, and unless specifically stated to the contrary, the first component may also be the second component.

Throughout the specification, unless otherwise stated, each component may be singular or plural.

As illustrated in the drawings, to describe the relationship between one element or feature and other element(s) or feature(s), for ease of description, spatial relative terms such as beneath, below, lower, above, upper, and the like, may be used in the present specification. Spatially relative dispositions are understood to encompass different directions of the device in use or operation in addition to the direction depicted in the figures. For example, when the drawing device is flipped, an element described as "below" or "bottom" another element may be understood to be "above" or "beyond" another element. Therefore, the term "down" may encompass both up and down directions.

It should be understood that when a component is described as "connected to" or "coupled to" another component, the components may be directly connected or accessed to each other, but other components may be "interposed" between the respective components, or the respective components may be connected, combined, or accessed to each other through other components.

The terms used in this specification are intended to describe example embodiments of the present disclosure and are not intended to limit the present disclosure.

When the terms "about" or "substantially" are used in this specification in connection with a numerical value, it is intended that the associated numerical value include a tolerance of $\pm 10\%$ around the stated numerical value. When ranges are specified, the range includes all values therebetween such as increments of 0.1%.

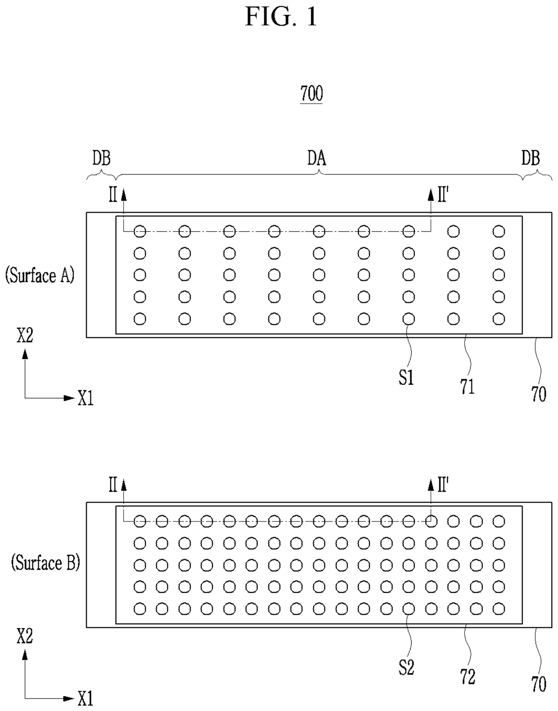

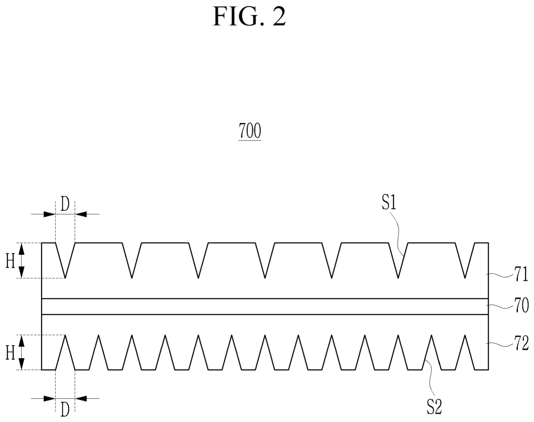

FIG. 1 illustrates a top plan view of an electrode for a battery according to an example embodiment, and FIG. 2 illustrates a cross-sectional view with respect to a line II-II' of FIG. 1.

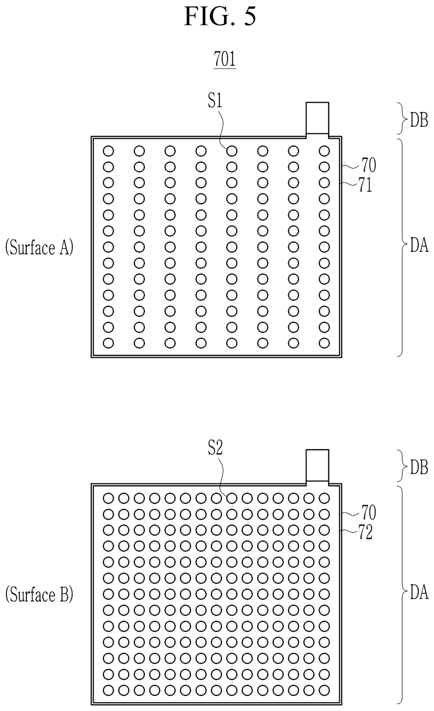

As illustrated in FIG. 1 and FIG. 2, the electrode 700 for a battery according to an example embodiment may include a substrate 70, and active material layers 71 and 72 formed on respective surfaces of the substrate 70. The electrode 700 is described with an electrode included in a winding-type electrode assembly of a rechargeable battery as an example, which is not limited thereto, and an electrode of a stacking-type electrode assembly (see FIG. 5) may also be used.

The substrate 70 may include an electrode activating portion DA and an electrode uncoated region DB, and the active material layers 71 and 72 may be formed in the electrode activating portion DA. The active material layers 71 and 72 may not be formed in the electrode uncoated region DB so the substrate may be exposed, and an electrode tab may be attached thereto to draw out a current.

The electrode uncoated region DB may be disposed on respective ends of the substrate in a length direction X1, and without being limited thereto, the electrode uncoated region DB may be formed in the length direction X1 of the substrate like the active material layer. The length direction X1 of the substrate may be or include a winding direction of the winding-type electrode assembly wound with respect to a winding axis X2 that is perpendicular to the length direction.

The active material layers 71 and 72 may be respectively formed on respective surfaces of the substrate 70. For better understanding and ease of description, a first surface of the substrate 70 is referred to as surface A, and a second surface thereof is referred to as surface B. The active material layers 71 and 72 may include a first active material layer 71 formed on the surface A of the substrate 70 and a second active material layer 72 formed on the surface B of the substrate 70.

First holes S1 and second holes S2 may be formed in the first active material layer 71 and the second active material layer 72. Multiple first holes S1 and multiple second holes S2 may be formed, and may be formed with different densities in the first active material layer 71 and the second active material layer 72. The second holes S2 may be more densely formed than the first holes S1.

The density of the first holes S1 may be in a range of from about 50 pt/mm$^2$ to about 300 pt/mm$^2$, and the density of the second holes S2 may be in a range of from about 100 pt/mm$^2$ to about 600 pt/mm$^2$. For example, the density of the first holes may be about 100 pt/mm$^2$, and the density of the second holes may be in a range of from about 200 pt/mm$^2$ to about 400 pt/mm$^2$. The density may be the number of holes per unit area (expressed in the unit pt/mm$^2$, "pt" = points or holes, respectively), and sizes of the first holes S1 and of the second holes S2, that is, a diameter (D) and a depth (H) may be the same.

The holes S1 and S2 may have a circular or polygonal (not shown) planar shape, may be arranged at a regular interval, and may form a matrix. The holes S1 and S2 may have decreasing widths as they become distant from the surfaces of the active material layers 71 and 72 and become nearer the substrate 70 to thus have cone or polypyramidal shapes.

The circular holes S1 and S2 may have diameters (D) in a range of about 5 $\mu$m to about 70 $\mu$m. The diameter of the polygonal holes may be the length of the longest diagonal. The holes S1 and S2 may have a depth (H) in a range of from about 5 $\mu$m to about 70 $\mu$m.

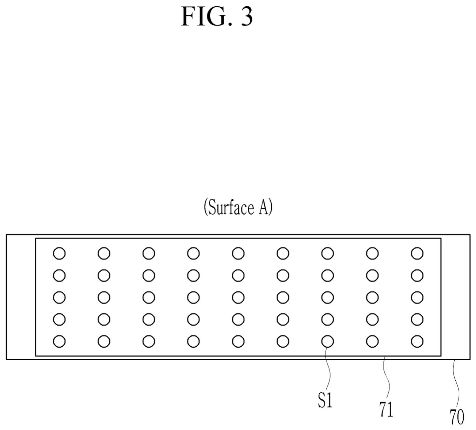

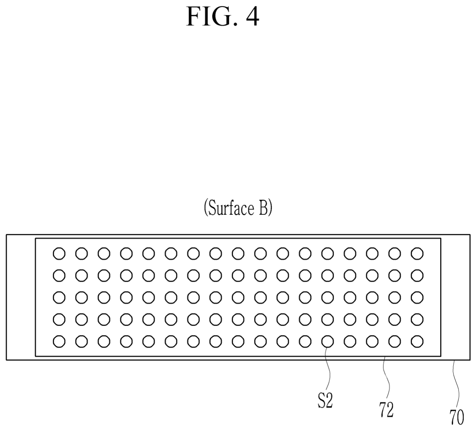

FIG. 3 and FIG. 4 illustrate a method for manufacturing an electrode, according to an example embodiment.

As illustrated in FIG. 3, the first active material layer 71 may be formed by applying an active material on the surface A of the substrate 70, and the first holes S1 may be formed in the first active material layer 71. The first holes S1 may be formed using, e.g., a roller with protrusions, or laser beams.

The first active material layer 71 may be dried. For example, when the first active material layer 71 includes a negative electrode active material, the drying process may be formed at a rate of about 10 m/min at a temperature in a range of from about 50°C to about 100°C.

During the drying process, the solvent included in the active material may be volatilized, and the binder in the active material may move to an upper portion of the active material layer.

As illustrated in FIG. 4, the second active material layer 72 may be formed by applying an active material on the surface B of the substrate 70, and the second holes S2 are formed in the second active material layer 72. The second holes S2 may be formed by the same method as the above-discussed method of forming the first holes, and the second holes S2 may be formed with a greater density than the density of the first holes.

The second active material layer 72 may be dried. The second active material layer 72 may be dried at a temperature that is higher than the drying temperature of the first active material layer 71 by more than about 10°C. For example, when the second active material layer 72 includes a negative electrode active material, the second active material layer 72 may be or dried progressed at the rate of about 10 m/min at a temperature in a range of from about 60 °C to about 110 °C.

During the drying process, the solvent included in the active material may be volatilized, and the binder in the active material may move to the upper portion of the active material layer. When drying the second active material layer, the second active material layer may be dried for a shorter period of time at the higher temperature to reduce the time for the dried first active material layer to be exposed to heat.

Drying of the second active material layer may be performed at a higher temperature than the drying of the first active material layer, and the greater number of binders than the first active material layer may move to the upper portion of the second active material layer.

As described above, the binder having moved to the upper portion during the drying process may hinder movement of lithium ions, and may increase resistance of the electrode, and in an example embodiment, the first holes and the second holes may be formed so that the lithium ions may easily move into the active material layer. The lithium ions may freely move by increasing the density of the second holes of the second active material layer which is exposed at the relatively high temperature and to which many binders move.

As described above, resistance of the electrode may be reduced and the electric characteristic of the electrode assembly may be increased by forming the first holes and the second holes and fluidly moving the lithium ions.

FIG. 5 illustrates a top plan view on an electrode for a battery, according to another example embodiment.

As illustrated in FIG. 5, the electrode 701 may include a substrate 70, and active material layers 71 and 72 formed on respective surfaces of the substrate 70, that is, the surface A and the surface B. The electrode 701 may be or include a sheet type included in the stacking-type electrode assembly of the rechargeable battery, and may include an electrode activating portion DA and an electrode uncoated region DB. The electrode uncoated region DB may protrude from the electrode activating portion and may be configured to draw out the current to the outside.

Impregnation times, number of cycles, and salt precipitation percentage (%) according to comparative examples and example embodiments may be measured and expressed in Table 1 below.

Comparative Example 1:

An electrode plate according to the comparative example 1 manufactures the active material by mixing 95.45% of graphite, 3.6% of binder styrene butadiene rubber (SBR), 0.8% of carboxyl methylcellulose (CMC), 0.1% of polyvinylpyrrolidone (PVP), 0.05% of conductive material, and solvent water. The manufactured active material with the thickness of $90\mu m$ may be applied to the surface A of a copper substrate and may be dried to form the first active material layer, and the active material may be applied to the surface B and may be dried to form the second active material layer. The active material may be applied to the first active material layer and the first active material layer may be dried at the rate of 10 m/min at the temperature of 65°C, and the active material may be applied to the second active material layer and the second active material layer may be dried at the rate of 10 m/min at the temperature of 75°C. Comparative Example 2:

Comparative Example 2 may be manufactured in the same way as the comparative example 1, excluding the fact that the holes are formed with the same density in the first active material layer and in the second active material layer.

Holes are formed with the density of 100 pt/mm$^2$ in the first active material layer and in the second active material layer. The holes may have a diameter of 30 $\mu$m and a depth of 50 $\mu$m.

Comparative Example 3:

Comparative Example 3 may be manufactured in the same way as the comparative example 2, excluding the fact that the holes are formed with different densities in the first active material layer and in the second active material layer.

Holes may be formed with the density of 400 pt/mm$^2$ in the first active material layer, and holes may be formed with the density of 100 pt/mm$^2$ in the second active material layer.

Embodiment 1:

Embodiment 1 may be manufactured in the same way as the comparative example 3, excluding the fact that holes are formed with the density of 100 pt/mm$^2$ in the first active material layer, and holes are formed with the density of 400 pt/mm$^2$ in the second active material layer.

Embodiment 2:

Embodiment 2 may be manufactured in the same way as the embodiment 1, excluding the fact that holes are formed with the density of 100 pt/mm$^2$ in the first active material layer, and holes are formed with the density of 300 pt/mm$^2$ in the second active material layer.

Embodiment 3:

Embodiment 3 may be manufactured in the same way as Embodiment 1, excluding the fact that holes are formed with the density of 100 pt/mm$^2$ in the first active material layer, and holes are formed with the density of 200 pt/mm$^2$ in the second active material layer.

Table 1:

| | | Comparative Example 1 | Comparative Example2 | Comparative Example3 | Embodiment 1 | Embodiment 2 | Embodiment 3 |
|---|---|---|---|---|---|---|---|
| Hole density | Surface A | - | 100pt/mm$^2$ | 400pt/mm$^2$ | 100pt/mm$^2$ | 100pt/mm$^2$ | 100pt/mm$^2$ |
| | Surface B | - | 100pt/mm$^2$ | 100pt/mm$^2$ | 400pt/mm$^2$ | 300pt/mm$^2$ | 200pt/mm$^2$ |
| Impregnation time (sec) | Surface A | 75 | 49 | 38 | 48 | 47 | 48 |
| | Surface B | 96 | 65 | 64 | 47 | 53 | 59 |
| Cycle (Capacity retention rate, reference of 80%) | | 613 | 689 | 667 | 753 | 720 | 704 |
| Salt precipitation (%) | Surface A | 0.8 | 0.51 | 0.38 | 0.24 | 0.31 | 0.41 |
| | Surface B | 1.3 | 0.77 | 0.82 | 0.26 | 0.37 | 0.63 |

Estimation of impregnation time:

The impregnation time may be performed in a dry room under the conditions of the temperature of 20°C and a dew point temperature of -50°C, and the electrode plate manufactured to a size of 5cm*5cm according to the comparative examples 1, 2, and 3 and the embodiments 1 and 2, 3 is prepared and is attached to a flat plate.
The electrolyte of 1μl is dropped on the prepared electrode plate, maintaining a contact angle of 45 degrees.
The electrolyte slowly permeates into the active material layer on the surface of the electrode plate, the time after the electrolyte has completely permeated into the active material layer is measured, the measurement is repeated five times, and mean values are reported in Table 1 above.
Referring to Table 1 above, it is found that the impregnation time of the comparative examples 2 and 3 and the embodiments 1 and 2, 3 is relatively shorter than the impregnation time of the comparative example 1 having no holes. It is found that the impregnation time is reduced by forming the holes.
When the holes are formed with the same density in the surface A of the active material layer and the surface B of the active material layer according to the comparative example 2, or the density of the surface A of the active material layer is formed higher than the density of the surface B of the active material layer as illustrated in the comparative example 3, it is found that there is a difference of impregnation time between the surface A of the active material layer and the surface B of the active material layer. Particularly, the difference of impregnation time between the surface A of the active material layer and the surface B of the active material layer is almost double according to the comparative example 3.

When the density of the surface A of the active material layer is lower than the density of the surface B of the active material layer according to the embodiments 1, 2, and 3, the difference of impregnation time between the surface A of the active material layer and the surface B of the active material layer is reduced. Particularly, it is found from the embodiment 1 that the difference of impregnation time is one second, and the impregnation times of the surface A of the active material layer and the surface B of the active material layer are almost equal to each other.

As describe above, when the impregnation times of the surface A of the active material layer and the surface B of the active material layer are equal to each other or are close to each other, the electrolyte may quickly and substantially uniformly permeate into the active material layer.

Cycle estimation:

The numbers of cycles having a capacity retention rate that is equal to or greater than 80% are measured, and cycle estimation are reported in Table 1 above.

The battery including the electrode plate manufactured according to the embodiments and the comparative examples is manufactured, charging and discharging is performed once with 0.33C, at 25°C, and in the range of 4.25V to 2.8V (first cycle), 20-minute fast charging and 0.33C discharging is performed (second cycle). Charging and discharging are repeatedly performed from the second cycle, and the number of cycles until the capacity retention rate maintains at greater than 80% is measured. The results are expressed as capacity retention rates in Table 1 above.

Capacity retention rate (%) = {(Discharge capacity at N-th cycle) / (Discharge capacity at first cycle)} x 100.

Referring to Table 1 above, the comparative examples 1, 2, and 3 show that the number of times where the capacity retention rates is maintained at equal to or greater than 80% is more than about 600 number of times, and the embodiments 1 2, and 3 show that the number of times increases to be equal to or greater than 700 number of times, which is greater than the case of the comparative example, so the lifespan of the battery is increased.

Estimation of salt precipitation:

The salt precipitation is estimated from an area precipitated by photographing images, the electrode plate is incised with a width of 95 mm and a length of 150 mm, images are photographed and analyzed. An 8-bit black and white image is generated by using an image analysis program (e.g., manufactured by National institute for occupational safety and health, ImageJ) for the photographed images, noise is removed, and a salt precipitation area is calculated from the area of the black and white image.

Referring to Table 1 above, the salt precipitation percentage (%) on the surface A and the surface B of the embodiments 1 and 2 is reduced compared to the salt precipitation % on the surface A and the surface B of the comparative examples 1, 2, and 3, and is reduced to more than half compared to the comparative examples.

When the electrolyte is non-uniform, the salt precipitation may increase, and the electrolyte uniformly permeates as illustrated in the embodiments 1, 2, and 3, so that the salt precipitation is reduced.

The salt precipitation of the embodiment 3 is further reduced compared to the comparative examples 1 and 2, but the salt precipitation% of the embodiment 3 is greater compared to the surface A of the comparative example 3. However, the embodiment 3 increases the impregnation time and the number of cycles compared to the comparative example 3, the salt precipitation on the surface B is reduced, the salt precipitation on the surface A is bigger than the comparative example 3, but other electric characteristics are improved so that the entire battery performance may be increased.

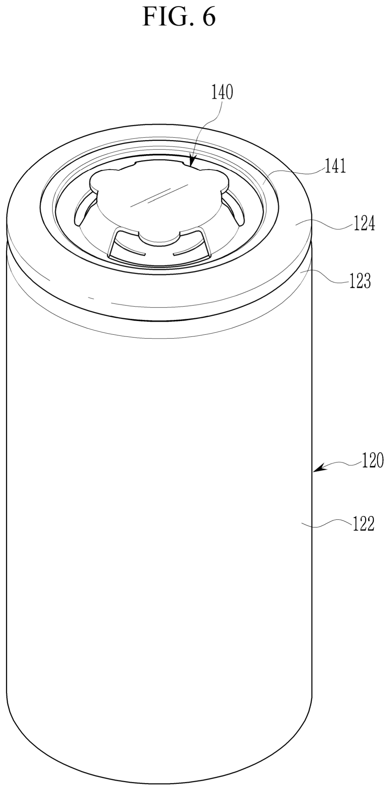

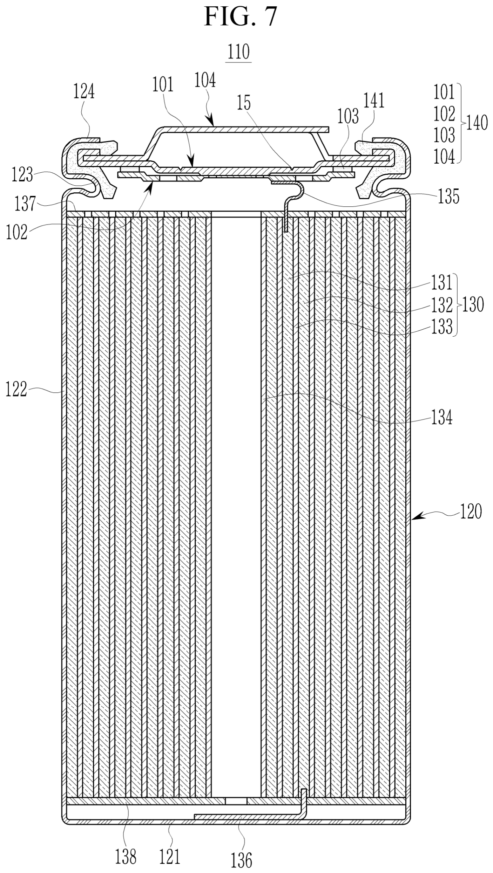

FIG. 6 illustrates a perspective view on a rechargeable battery according to an example embodiment, and FIG. 7 illustrates a cross-sectional view on a rechargeable battery illustrated in FIG. 6.

As illustrated in FIG. 6 and FIG. 7, the rechargeable battery 110 may include a case 120, an electrode assembly 130 received in the case 120, and a cap assembly 140 assembled in an opening of the case 120 and sealing the case 120. The cap assembly 140 may include a safety vent 101 for reducing or preventing explosion of the rechargeable battery 110, and a cap up portion 104 for covering the safety vent 101.

The electrode assembly 130 may include a positive electrode 131, a separator 133, and a negative electrode 132 that are sequentially stacked. The electrode assembly 130 may be or include a cylindrical jellyroll generated by stacking and winding the positive electrode 131, the separator 133, and the negative electrode 132.

The positive electrode 131 may include a positive electrode substrate, an electrode activating portion in which an active material layer is formed on the positive electrode substrate, and an electrode uncoated region in which no active material layer is formed and the substrate is exposed. The positive electrode substrate may be made of or include a thin conductive metal plate, and may constitute a current collector, for example, the positive electrode substrate may be or include aluminum. A positive electrode tab 135 may be connected to the electrode uncoated region, and may be made of or include a material included in the substrate such as, for example, aluminum.

Regarding the positive electrode 131, as illustrated in FIG. 1 and FIG. 2 with electrode 700, the first active material layer 71 and the second active material layer 72 may be formed on respective sides of the substrate 70. The first active material layer 71 may have first holes S1, and the second active material layer 72 may have second holes S2. The density of the second holes S2 may be greater than the density of the first holes S1. The first active material layer may be formed, and the second active material layer may then be formed and dried at a higher temperature than the first active material layer.

The positive electrode active material layer may be formed on respective surfaces of the positive electrode substrate. The positive electrode active material layer may include a positive electrode active material, and may further include a binder and/or a conductive material. A content of the positive electrode active material of the positive electrode active material layer may be in a range of from about 90 wt% to about 99.5 wt% for 100 wt% of the positive electrode active material layer, and contents of the binder and the conductive material may be in a range of from about 0.5 wt% to about 5 wt% for 100 wt% of the positive electrode active material layer.

Positive electrode active material

The positive electrode active material may include a lithiated intercalation compound of lithium. In detail, the positive electrode active material may include at least one of composite oxides with a metal such as or including at least one among cobalt, manganese, nickel, and combinations thereof, and lithium.

The composite oxide may be or include a lithium transition metal composite oxide, for example, the composite oxide may include lithium nickel-based oxide, lithium cobalt-based oxide, lithium manganese-based oxide, lithium iron phosphate-based compound, cobalt-free nickel-manganese-based oxide, or combinations thereof.

For example, the composite oxide may include a compound expressed as one of the following formulas:

$Li_aA_{1-b}X_bO_{2-c}D_c$ ($0.90 \leq a \leq 1.8$, $0 \leq b \leq 0.5$, $0 \leq c \leq 0.05$); $Li_aMn_{2-b}X_bO_{4-c}D_c$ ($0.90 \leq a \leq 1.8$, $0 \leq b \leq 0.5$, $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNiG_bO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMn_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); $Li_aMn_{1-g}G_gPO_4$ ($0.90 \leq a \leq 1.8$, $0 \leq g \leq 0.5$); $Li_{(3-f)}Fe_2PO_{43}$ ($0 \leq f \leq 2$); $Li_aFePO_4$ ($0.90 \leq a \leq 1.8$).

In the above formula, A is or includes at least one of Ni, Co, Mn, or combinations thereof; X is or includes at least one of Al, Ni, Co, Mn, Cr, Fe, Mg, Sr, V, rare-earth elements or combinations thereof; D is or includes at least one of O, F, S, P, or combinations thereof; G is or includes at least one of Al, Cr, Mn, Fe, Mg, La, Ce, Sr, V, or combinations thereof; $L^1$ is or includes at least one of Mn, Al or combinations thereof.

For example, the positive electrode active material may be or include a high-nickel-based positive electrode active material in which a nickel content is 80 mol% or more, 85 mol% or more, 90 mol% or more, 91 mol% or more, or 94 mol% or more and 99 mol% or less with respect to 100 mol% of metal excluding lithium in the lithium transition metal composite oxide. The high-nickel-based positive electrode active material may realize high capacity, and thus may be applied to high-capacity and high-density lithium rechargeable batteries.

Binder

The binder adheres the positive electrode active material particles to each other, and adheres the positive electrode active material to the current collector. Representative examples of the binder include at least one of polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, nylon, and the like, but are not limited thereto.

Conductive material

The conductive material is included in order to give conductivity to the electrode, and may be any material as long as the electronic conductive material does not trigger an adverse chemical change in the battery configured. Examples of the conductive material may include a carbon-based material such as at least one of natural graphite, artificial graphite, carbon black, acetylene black, Ketjen black, a carbon fiber, a carbon nanofiber, and a carbon nanotube; and may be or include a metal-based material in the form of metal powder or metal fiber including at least one of copper, nickel, aluminum, silver, and the like; a conductive polymer such as a polyphenylene derivative; or mixtures thereof.

The negative electrode 132 may include a negative electrode substrate, an electrode activating portion including an active material layer on the negative electrode substrate, and an electrode uncoated region in which no active material layer is formed and the substrate is exposed. The negative electrode substrate may be made of or include a thin conductive metal plate, may be used as a current collector, and for example, may be or include copper

A negative electrode tab 136 may be connected to the electrode uncoated region.

As illustrated in FIG. 1 and FIG. 2, regarding the negative electrode 136 represented by electrode 700, the first active material layer 71 and the second active material layer 72 may be formed on respective surfaces of the substrate 70. The first active material layer 71 may have first holes S1, and the second active material layer 72 may have second holes S2. The density of the second holes S2 may be greater than the density of the first holes S1. The first active material layer may be formed, and the second active material layer may then be formed and dried at a higher temperature than a drying temperature of the first active material layer.

The content of the negative electrode active material on the negative electrode active material layer may be in a range of from about 95 wt% to about 99 wt% of the entire weight of the negative electrode active material layer.

The negative electrode active material includes a binder, and may selectively further include a conductive material. The content of the binder of the negative electrode active material may be in a range of about 1 wt% to about 5 wt% for the entire weight of the negative electrode active material. When further including the conductive material, 90 wt% to 98 wt% of the negative electrode active material, 1 wt% to 5 wt% of the binder, and 1 wt% to 5 wt% of the conductive material may be used.

Negative electrode active material

The negative electrode active material may include at least one of a material for reversibly intercalating/deintercalating lithium ions, a lithium metal, alloys of the lithium metal, a material doped to the lithium and dedoped from the same, or a transition metal oxide.

The material for reversibly intercalating/deintercalating lithium ions may include, for example crystalline carbon, amorphous carbon, or a combination thereof as a carbon-based negative active material. The crystalline carbon may be non-shaped, or sheet, flake, spherical, or fiber shaped natural graphite or artificial graphite, and the amorphous carbon may be or include at least one of a soft carbon, a hard carbon, a mesophase pitch carbonized product, calcined coke, and the like.

The alloy of the lithium metal may include an alloy of lithium and at least one metal of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, $SiO_x$ (0 < x < 2), and a Si-Q alloy (wherein Q is or includes at least one of an alkali metal, an alkaline-earth metal, a Group 13 element, a Group 14 element, a Group 15 element, a Group 16 element, a transition metal, a rare earth element, and combinations thereof, but not Si). The Sn-based negative electrode active material may include at least one of Sn, $SnO_2$, Sn-based alloy, or combinations thereof.

The silicon-carbon composite may be or include a composite of silicon and amorphous carbon. According to an example embodiment, the silicon-carbon composite may have the form of silicon particles and amorphous carbon coated on the surface of the silicon particles. For example, the silicon-carbon composite may include secondary particles (cores) in which silicon primary particles are assembled, and an amorphous carbon coating layer (shell) disposed on the surface of the secondary particles. The amorphous carbon may also be disposed between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer disposed on the surface of the core.

The Si-based negative electrode active material or the Sn-based negative electrode active material may be mixed with the carbon-based negative electrode active material and may be used.

Binder

The binder may attach the negative electrode active material particles to each other, and may attach the negative electrode active material to the current collector. A nonaqueous binder, an aqueous binder, a dry binder, or combinations thereof may be used as the binder

The nonaqueous binder may include at least one of polyvinylchloride, carboxylated polyvinylchloride, polyvinylfluoride, ethylene propylene copolymer, polystyrene, polyurethane, polytetrafluoroethylene, polyvinylidene fluoride, polyethylene, polypropylene, polyamideimide, polyimide, or combinations thereof.

The aqueous binder may be or include at least one of styrene-butadiene rubber, (meth)acrylated styrene-butadiene rubber, (meth)acrylonitrile-butadiene rubber, (meth)acryl rubber, butyl rubber, fluorine rubber, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acryl resin, phenol resin, epoxy resin, polyvinyl alcohol, and combinations thereof.

When the aqueous binder is used as the negative electrode binder, a cellulose-based compound for providing viscosity may be further included. At least one of carboxylmethyl cellulose, hydroxypropylmethyl cellulose, methyl cellulose, or alkali metal salt thereof may be mixed as the cellulose-based compound. Na, K or Li may be included as the alkali metal.

The dry binder may be or include a polymer material made into fibers, for example, the dry binder may be or include polytetrafluoroethylene, polyvinylidene fluoride, polyvinylidene fluoride-hexafluoropropylene copolymer, polyethylene oxide, or combinations thereof.

Conductive material

The conductive material provides conductivity to the electrode, and any types of electron conductive materials generating no chemical changes are usable for the configured battery. For example, the conductive material may include carbon-based materials such as at least one of natural graphite, artificial graphite, carbon black, acetylene black, Ketjen black, carbon fiber, carbon nanofiber, or carbon nanotube; metal-based materials including at least one of copper, nickel, aluminum, and silver and having a form of metal powder or metal fiber; conductive polymers such as polyphenylene derivative; or mixtures thereof.

The separator 133 may be disposed between the first electrode 131 and the second electrode 132 to insulate the first electrode 131 and the second electrode 132 from each other, and the separator 133 may include at least one of polyethylene, polypropylene, polyvinylidene fluoride, or multilayers thereof, and may also include mixed multilayers such as a two-layered separator of polyethylene/polypropylene, a three-layered separator of polyethylene/polypropylene/polyethylene, and a three-layered separator of polypropylene/polyethylene/polypropylene.

The electrode assembly 130 may be wound with respect to a center pin 134, and the center pin 134 may be disposed in a center of the electrode assembly 130, and may be arranged in parallel to a direction in which the electrode assembly 130 is inserted into the case 120.

The center pin 134 having a circular pipe shape with an empty inside portion may allow a reduced or minimum transformation, or may maintain the shape that is close to the shape prior to transformation when receiving a total compressing weight or a partial impact weight applied from the outside of the rechargeable battery. The center pin 134 may constitute a passage for moving gas generated in an inside portion thereof. The center pin 134 may be omitted when needed.

The center pin 134 may be made of or include a material with rigidity, for example, a conductive metal such as steel, a steel alloy, aluminum, or an aluminum alloy so that the center pin 134 may be transformed to a minimum for the external impact. The center pin 134 may be conductive, so a first insulation plate 137 may be disposed between the cap assembly 140 and an upper portion of the center pin 134, and a second insulation plate 138 may be disposed between a bottom portion 121 of the case 120 and a lower portion of the center pin 134 so that respective ends of the center pin 134 may be maintained to be insulated.

A penetration hole passing through an inside of the center pin 134, a penetration hole through which the positive electrode tab 135 passes, and penetration holes into which electrolytes are input may be formed in the first insulation plate 137. A penetration hole passing through the inside of the center pin 134 and a penetration hole through which the negative electrode tab 136 passes may be formed in the second insulation plate 138.

One side of the case 120 may be opened so that the electrolyte and the electrode assembly 130 may be inserted into the case 120, and the case 120 may have substantially the same shape as the electrode assembly 130. The case 120 may include a circular bottom portion and a cylindrical lateral portion extending upward from the bottom portion by a predetermined length.

An upper portion of the cylindrical case may be opened while the rechargeable battery is assembled. Therefore, the electrode assembly may be inserted into the cylindrical case during the process for assembling a rechargeable battery, and the electrolyte solution may be injected into the cylindrical case. The case 120 may be made of or include steel, steel alloy, aluminum, and aluminum alloy.

The electrolyte may allow lithium ions generated by an electrochemical reaction to move in the positive electrode and the negative electrode in the battery.

The electrolyte may be made of or include organic solvents such as ethylene carbonate (EC), propylene carbonate (PC), diethyl carbonate (DEC), ethyl methyl carbonate (EMC), or EMC and a lithium salt such as $LiPF_6$ and $LiBF_4$. The electrolyte may be liquid, solid, or gel.

A beading portion 123 and a crimping portion 124 may be disposed on a lateral portion 122 of the case 120.

The beading portion 123 may be transformed to be concave toward the inside of the case 120, and the crimping portion 124 may be transformed so that an edge of the lateral portion 122 may be bent toward the inside. A movement of the electrode assembly 130 may be reduced or suppressed by the beading portion 123, and the cap assembly 140 may be affixed to the case 120 by the crimping portion 124.

The cap assembly 140 may include a safety vent 101 for hindering or preventing explosion of the rechargeable battery 110, and a cap up portion 104 for covering the safety vent 101.

The cap assembly 140 may include a safety vent 101 having a notch groove 15, a cap down portion 102 disposed on a side (or a lower side) of the safety vent 101 facing the electrode assembly 130, a ring-shaped insulating portion 103 disposed between the safety vent 101 and the cap down portion 102, and a cap up portion 104 disposed on a side (or an upper side) of the safety vent 101 disposed opposite to the cap down portion 102. The safety vent 101 may be referred to as a current interruptive device (CID).

The central portion of the safety vent 101 may be greater than a thickness of a peripheral portion surrounding the central portion, and the notch groove 15 may be disposed on the peripheral portion of the safety vent 101.

The thickness of the central portion of the cap down portion 102 may be less than the thickness of the peripheral portion surrounding the central portion, and at least one opening may be formed.

The central portion of the safety vent 101 and the central portion of the cap down portion 102 may be integrally bonded by a method such as, e.g., welding, and the safety vent 101 and the cap down portion 102 may be spaced apart from each other by a gap therebetween on a portion excluding the central portion.

The insulating portion 103 may surround the central portions of the safety vent 101 and the cap down portion 102, and may be disposed between the safety vent 101 and the cap down portion 102. The insulating portion 103 may be, e.g., integrally bonded to the safety vent 101 and the cap down portion 102 by a method such as, e.g., coalesce.

The positive electrode tab 135 of the electrode assembly 130 may be affixed to a first surface (or a lower surface) of the cap down portion 102, and the cap down portion 102, the safety vent 101, and the cap up portion 104 may be positively charged. The positive electrode tab 135 may be bent to face the first surface of the cap down portion 102 to increase a contact area with the cap down portion 102.

The cap up portion 104 may protrude outside to constitute a positive electrode terminal for contacting an external device and flowing the current to an outside of the battery 110, and may have a planar surface.

The negative electrode tab 136 may be connected to the electrode uncoated region of the negative electrode, and may be affixed to a lower bottom surface of the case 120 by, e.g., welding, to protrude in the opposite direction to the positive electrode tab 135. Therefore, the case 120 may be negatively charged, and the bottom portion 121 of the case 120 may constitute a negative terminal

The cap assembly 140 may be combined to the lateral portion 122 of the case 120 with the insulation gasket 141 as a medium. The insulation gasket 141 may surround edges of the safety vent 101 and of the cap up portion 104, and may be compressed between the bidding portion 123 and the crimping portion of the case 120.

When the rechargeable battery 100 is used, gas may be generated in the case 120, and an internal pressure of the rechargeable battery 100 may be increased by the gas.

When the gas is generated, a pressure may be continuously applied to the safety vent 101 through an opening of the cap-down portion 102, the safety vent 101 may be transformed toward the external side (or upper side) of the cap assembly 140 at a specific pressure, and the safety vent 101 may be separated from the cap-down portion 102. The central portion of the cap down portion 102 may be fractured from the peripheral portion, may be adhered to the central portion of the safety vent 101, and may lift together with the safety vent 101.

The current flow may be interrupted by the separation of the safety vent 101 and the cap down portion 102, and the internal gas may be discharged when the pressure continuously increases and the safety vent 101 is fractured with respect to the notch groove 15. The internal gas may be discharged to the outside of the rechargeable battery 110 through the exhaust portion formed in the cap up portion 104.

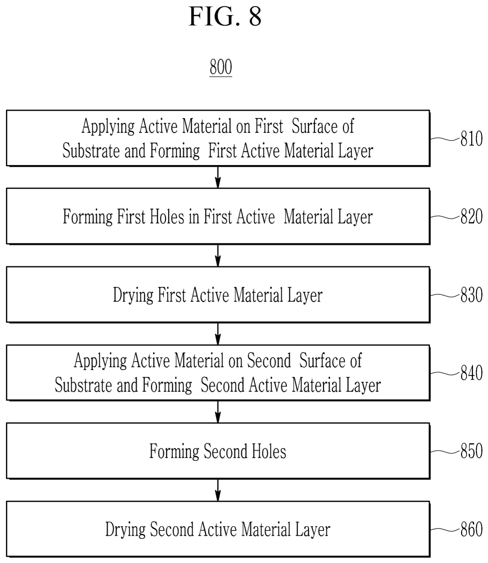

FIG. 8 is a flowchart illustrating a method of manufacturing an electrode for a battery, according to an example embodiment. In FIG. 8, the method 800 includes operation 810 which includes applying an active material on a first surface of a substrate and forming a first active material layer. Operation 820 includes forming first holes in the first active material layer. Operation 830 includes drying the first active material layer. Operation 840 includes applying an active material on a second surface of the substrate and forming a second active material layer.

Operation 850 includes forming second holes having a density that is higher than a density of the first holes in the second active material layer. For example, the density of the second holes is at least twice the density of the first holes. In a further example, the first holes and the second holes have a same diameter and depth.

Operation 860 includes drying the second active material layer at a higher temperature than the first active material layer. For example, the drying of the second active material layer includes drying the second active material layer at a same drying rate as the first active material layer at a temperature that is higher than a drying temperature of the first active material layer by about 10°C or more. In another example, the first active material layer and the second active material layer include a negative electrode active material, the first active material layer is dried at a rate of about 10 m/min at a temperature in a range of from about 50°C to about 100°C, and the second active material layer is dried at a rate of about 10 m/min at a temperature in a range of from about 60 °C to about 110 °C.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

**Description of symbols:**

| | | | |
|---|---|---|---|
| 70: | substrate | 71, 72: | active material layer |
| 110: | rechargeable battery | 120: | case |
| 130: | electrode assembly | 131: | positive electrode |
| 132: | negative electrode | 133: | separator |
| 134: | center pin | 135: | positive electrode tab |
| 136: | negative electrode tab | 140: | cap assembly |
| 700, 701: | electrode | | |

**Claims**

1. An electrode for a battery, the electrode comprising:

   a substrate;
   a first active material layer formed on a first surface of the substrate and having first holes; and
   a second active material layer formed on a second surface of the substrate and having second holes,
   wherein a density of the first holes of the first active material layer is different from a density of the second holes of the second active material layer.

2. The electrode for a battery as claimed in claim 1, wherein the density of the second holes is greater than the density of the first holes.

3. The electrode for a battery as claimed in claim 2, wherein the density of the second holes is at least twice the density of the first holes.

4. The electrode for a battery as claimed in any one of claims 1 to 3, wherein the density of the first holes is in a range of from about 50 pt/mm$^2$ to about 300 pt/mm$^2$, and the density of the second holes is in a range of from about 100 pt/mm$^2$ to about 600 pt/mm$^2$.

5. The electrode for a battery as claimed in any one of claims 1 to 4, wherein diameters and depths of the first holes and the second holes are the same.

6. The electrode for a battery as claimed in any one of claims 1 to 5, wherein the diameters of the first holes and the second holes are in a range of from about 5 $\mu$m to about 70 $\mu$m.

7. The electrode for a battery as claimed in any one of claims 1 to 6, wherein the first holes and the second holes have decreasing widths in accordance with a distance to the substrate.

8. The electrode for a battery as claimed in any one of claims 1 to 7, wherein the first holes and the second holes are arranged in a matrix configuration.

9. The electrode for a battery as claimed in any one of claims 1 to 8, wherein the first active material layer and the second active material layer include a negative electrode active material.

10. A method for manufacturing an electrode for a battery, the method comprising:

    applying an active material on a first surface of a substrate and forming a first active material layer;
    forming first holes in the first active material layer;

drying the first active material layer;
applying an active material on a second surface of the substrate and forming a second active material layer;
forming second holes having a density that is higher than a density of the first holes in the second active material layer; and
drying the second active material layer at a higher temperature than the first active material layer.

11. The method as claimed in claim 10, wherein the density of the second holes is at least twice the density of the first holes.

12. The method as claimed in claim 10 or 11, wherein the drying of the second active material layer comprises drying the second active material layer at a same drying rate as the first active material layer at a temperature that is higher than a drying temperature of the first active material layer by about 10°C or more.

13. The method as claimed in claim 12, wherein:

the first active material layer and the second active material layer include a negative electrode active material,
the first active material layer is dried at a rate of about 10 m/min at a temperature in a range of from about 50 °C to about 100 °C, and
the second active material layer is dried at a rate of about 10 m/min at a temperature in a range of from about 60 °C to about 110 °C; and,
optionally wherein the first holes and the second holes have a same diameter and depth.

14. A rechargeable battery comprising:

an electrode assembly including a positive electrode, a negative electrode overlapping the positive electrode, and a separator between the positive electrode and the negative electrode;
a case for receiving the electrode assembly;
an electrolyte injected into the case; and
a cap assembly for sealing the case,
wherein at least one of the positive electrode and the negative electrode includes a substrate, a first active material layer formed on a first surface of the substrate and having first holes, and a second active material layer formed on a second surface of the substrate and having second holes formed at a greater density than the first holes.

15. The rechargeable battery as claimed in claim 14, wherein:

the electrode assembly is a winding-type electrode assembly, and
the first holes and the second holes are arranged in a matrix in a winding direction of the electrode assembly.

# FIG. 1

700

# FIG. 2

<u>700</u>

FIG. 3

(Surface A)

S1    71    70

FIG. 4

(Surface B)

S2    72    70

# FIG. 5

701

# FIG. 6

# FIG. 7

# FIG. 8

800

```
┌──────────────────────────────────────────────┐
│  Applying Active Material on First  Surface of │ ~810
│ Substrate and Forming  First Active Material Layer │
└──────────────────────────────────────────────┘
                      │
                      ▼
┌──────────────────────────────────────────────┐
│  Forming First Holes in First Active  Material Layer │ ~820
└──────────────────────────────────────────────┘
                      │
                      ▼
┌──────────────────────────────────────────────┐
│         Drying First Active Material Layer      │ ~830
└──────────────────────────────────────────────┘
                      │
                      ▼
┌──────────────────────────────────────────────┐
│  Applying Active Material on Second  Surface of │ ~840
│ Substrate and Forming  Second Active Material Layer │
└──────────────────────────────────────────────┘
                      │
                      ▼
┌──────────────────────────────────────────────┐
│              Forming Second Holes              │ ~850
└──────────────────────────────────────────────┘
                      │
                      ▼
┌──────────────────────────────────────────────┐
│        Drying Second Active Material Layer     │ ~860
└──────────────────────────────────────────────┘
```

Europäisches
Patentamt

European
Patent Office

Office européen
des brevets

## EUROPEAN SEARCH REPORT

**Application Number**

EP 25 21 7059

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/091754 A1 (MIYAHISA MASAHARU [JP] ET AL) 21 April 2011 (2011-04-21) | 1-9,14, 15 | INV. H01M4/04 |
| A | * paragraph [0035] * <br> * paragraph [0037] - paragraph [0038] * <br> * figure 6 * | 10-13 | H01M4/13 <br> H01M4/139 <br> H01M10/052 |
| X | US 2024/274779 A1 (KATSU YAYOI [JP]) 15 August 2024 (2024-08-15) | 1-9,14, 15 | |
| A | * paragraph [0071] - paragraph [0074]; figures 3A-C * | 10-13 | |
| X | WO 2018/038479 A1 (LG CHEMICAL LTD [KR]) 1 March 2018 (2018-03-01) | 1-9,14, 15 | |
| A | * claims 1-2; figures 3-6 * <br> * Summary of the invention * | 10-13 | |
| A | US 2020/295360 A1 (BAE JUHYE [KR] ET AL) 17 September 2020 (2020-09-17) <br> * paragraph [0039] - paragraph [0040]; figure 1A * | 1-15 | |

**TECHNICAL FIELDS SEARCHED (IPC)**

H01M

The present search report has been drawn up for all claims

| Place of search | Date of completion of the search | Examiner |
|---|---|---|
| Munich | 8 April 2026 | Tylus, Urszula |

EPO FORM 1503 03.82 (P04C01)

## ANNEX TO THE EUROPEAN SEARCH REPORT
## ON EUROPEAN PATENT APPLICATION NO.

EP 25 21 7059

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2026

| Patent document cited in search report | | Publication date | Patent family member(s) | | Publication date |
|---|---|---|---|---|---|
| US 2011091754 | A1 | 21-04-2011 | CN | 102017237 A | 13-04-2011 |
| | | | JP | 4672079 B2 | 20-04-2011 |
| | | | JP | 2010186738 A | 26-08-2010 |
| | | | KR | 20100108458 A | 06-10-2010 |
| | | | US | 2011091754 A1 | 21-04-2011 |
| | | | WO | 2010082257 A1 | 22-07-2010 |
| US 2024274779 | A1 | 15-08-2024 | JP | 7754190 B2 | 15-10-2025 |
| | | | JP | WO2023079974 A1 | 11-05-2023 |
| | | | US | 2024274779 A1 | 15-08-2024 |
| | | | WO | 2023079974 A1 | 11-05-2023 |
| WO 2018038479 | A1 | 01-03-2018 | PL | 3370280 T3 | 22-03-2021 |
| | | | WO | 2018038479 A1 | 01-03-2018 |
| US 2020295360 | A1 | 17-09-2020 | CN | 111697197 A | 22-09-2020 |
| | | | KR | 20200109764 A | 23-09-2020 |
| | | | US | 2020295360 A1 | 17-09-2020 |

EPO FORM P0459

For more details about this annex : see Official Journal of the European Patent Office, No. 12/82